# EUROPÄISCHE PATENTSCHRIFT

(11) **EP 1 357 064 B1**
(45) Veröffentlichungstag und Bekanntmachung des Hinweises auf die Patenterteilung: **09.08.2006**
(21) Anmeldenummer: 03009245.6
(22) Anmeldetag: 23.04.2003
(51) Int. Cl.: B65G 47/256, B67B 3/064, B65G 47/68, B07C 5/344

(54) **Vertikale Parallelförderung von Deckelverschlüssen**
Vertical parallel conveying of caps
Système de transport vertical parallèle de couvercles

(30) Priorität: 23.04.2002 DE 10218100; 22.02.2003 DE 10307601
(43) Veröffentlichungstag der Anmeldung: 29.10.2003
(73) Patentinhaber: Amcor Limited, Abbotsford, Victoria 3067 (AU)
(72) Erfinder: Schoenke, Hans-Jürgen, 29693 Boehme (DE)
(74) Vertreter: Leonhard, Frank Reimund

(56) Entgegenhaltungen:
- EP-A- 0 782 888
- EP-A- 1 072 513
- WO-A-01/55014

## Beschreibung

Die Erfindung befasst sich mit einer Vorrichtung und einem Verfahren zur Förderung von Verschlüssen aus Metallblech (metallischem Blech), gemäß Oberbegriff des Anspruchs 1 oder des Anspruchs 10.

Fördereinrichtungen zur bevorzugt **vertikalen Förderung** von Verschlußdeckeln aus magnetisch anziehbarem (ferromagnetischem) Metallblech sind vom Wesen her eine Vereinzelung einer kollektiv angeförderten oder aus einem Behälter entnommenen Menge von Einzelverschlüssen, die auf eine Linie von Verschlüssen zusammengeführt werden, welche Linie von einem Förderband in Längsrichtung aufwärts gefördert wird. Im Zuge der Längsförderung wird an einer Stelle des Förderbands eine Ausblasvorrichtung seitlich angeordnet, die funktionell mit einer Sensoreinrichtung gekoppelt ist, welche erfaßt, ob der Verschluß lagerichtig oder lageverkehrt in der Reihe gelegen ist, der jeweils gerade unter der Sensoreinrichtung angelangt ist. Diese Erkennung läßt sich aufgrund der Kappenstruktur der Verschlußdeckel leicht erreichen, weil die Deckwand (Spiegel oder "Panel") der im Schnitt U-förmigen Verschlußdeckel ein anderes Sensorsignal erbringt, als die Messung in den hohlen Innenraum der Kappe. Deshalb können die Verschlußdeckel leicht erkannt werden, die mit ihren Randstegen oder Kanten auf dem Förderband und mit ihren flachen Oberseiten (Deckwänden) zum Sensor zeigend in der Reihe liegen. Diese Kappen werden durch einen Druckluftstoß seitlich ausgeblasen, so daß nach der Sensor- und Austragseinrichtung weniger Verschlüsse verbleiben, die in Längsrichtung gefördert werden. Dafür sind die Verschlüsse hinsichtlich Ihrer Lage bereinigt. Es befinden sich also nur lagerichtige Verschlüsse in der jetzt aber mit Lücken versehenen Reihe, so daß die Förderkapazität herabgesetzt wird (interne Benutzung, keine öffentliche zugängliche Referenz bekannt).

Um die Herabsetzung der Förderkapazität zu kompensieren sind seit längerem Bestrebungen im Gange und auch Entwicklungen erfolgreich abgeschlossen worden, bei denen die kappenförmigen Verschlüsse - statt ausgeblasen - mit einer Wendevorrichtung umgedreht und in der Reihe wieder plaziert werden, vergleiche beispielsweise die **WO-A 01/55014** (CCS&CMB), dort Seite 8, Zeilen 16 bis 22 und dortiger Anspruch 13, Merkmal (ii). Damit kann eine Herabsetzung der Leistungsfähigkeit, gemessen in (richtig liegenden) Verschlußdeckeln ("closure") pro Minute (oder Deckel bzw. Kappen pro Minute) vermieden werden, jeweils verglichen bei einer gleichen Geschwindigkeit des Förderbandes.

Die Erfindung geht einen anderen Weg. Sie möchte **als technische Problemstellung** die Förderleistung (Leistungsfähigkeit) nicht nur beibehalten, sondern ggf. auch erhöhen, ohne eine aufwändige Vorrichtung zum Wenden der Deckel einzusetzen oder das Band beschleunigen zu müssen. In Abkehr von der Zielrichtung des Standes der Technik soll dabei die Leistungsfähigkeit selbst dann erhöht werden können, wenn die Geschwindigkeit des Bandes herabgesetzt wird. Unter Leistungsfähigkeit ist im folgenden die Anzahl der geförderten Deckel/min zu verstehen, die bisher eine Größenordnung von ca. 800 Deckel/min erreicht.

Zur Lösung wird gemäß Anspruch 1 eine Vorrichtung und gemäß Anspruch 10 ein Verfahren vorgeschlagen, wobei auf dem Förderband erheblich mehr bzw. eine große Anzahl Deckel zu einer Sensor- und Austragseinrichtung parallel zugefördert werden, so daß der Verlust durch Austragen von nicht lagerichtig gelegenen Deckeln nicht oder kaum ins Gewicht fällt.

Erfindungsgemäß kann die Leistungsfähigkeit nahezu verdoppelt werden, leicht abhängig davon, wie viele Verschlüsse lagefalsch in den mehreren Reihen (bevorzugt zwei Reihen) zugeförderter Deckel befindlich sind.

Bei zwei Bahnen oder Linien von parallel zugeförderten Deckelreihen (Anspruch 14), welche benachbart auf dem Förderband zugefördert werden, getrennt von einem Steg, der bevorzugt im wesentlichen mittig das Förderband in zwei längs gerichtete langgestreckte Förderabschnitte aufteilt (Anspruch 8), wird die Förderleistung praktisch verdoppelt. Die zur Sensor- und Austragsstelle zugeförderten zwei Reihen werden nach dem Ende des sie physisch trennenden Steges (Anspruch 23, Anspruch 11), im Anschluß an die Sensor- und Austragseinrichtung wieder zusammengeführt (Anspruch 37), um eine Reihe aus dicht aufeinanderfolgenden Verschlüssen oder eine praktisch lückenlose Kette von Verschlüssen zu bilden. Diese Reihe kann auch als "Verschlußstrang" oder eine praktisch lückenlose Kette von aufgereihten Verschlüssen benannt werden, die am Ausgang der Fördereinrichtung zur Weiterbearbeitung oder Verarbeitung abgegeben werden.

Die Zufuhr von solchen Verschlußdeckeln kann aus einem Behälter erfolgen, in dem sie als Volumen gelagert werden. Als Verschlüsse kommen solche metallischen (ferromagnetischen) Verschlüsse in Frage, die in der Verpackungstechnik Anwendung finden, beispielsweise Blechdeckelverschlüsse mit Deckwand und Umfangswand sowie daran nach radial innen weisende Nocken zur Bildung von "Nocken-Drehverschlüssen". Sie können mit der Vorrichtung gefördert werden, wobei der abgegebene Verschlußstrang von Deckeln entweder weiterverarbeitet wird oder zur Verschließmaschine weiter-gefördert wird.

Unter der vorstehend angegebenen Annahme der Verdoppelung der Zufördermenge bei gleicher Geschwindigkeit des Förderbandes kommt es hinsichtlich der tatsächlich erreichten Leistungserhöhung auf die Anzahl der nicht lagerichtig liegenden Deckel an. Sind hypothetisch angenommen keine solche Deckel in beiden Fördersträngen kann die Leistung verdoppelt werden. Davon ist in der Regel aber nicht auszugehen, so daß eine gewisse Anzahl von zugeförderten Deckeln nicht lagerichtig liegt, statistisch gesehen in jeder Reihe die Hälfte, so daß die Leistungsfähigkeit auch ohne eine Deckel-Wendeeinrichtung gegenüber einer mit nur lagerichtig zugeführten einbahnigen Förderung zumindest gleichwertig ist. Bei einem Vergleich mit einer einbahnigen Förderung - mit statistisch hälftig verteilten lagerichtigen und lagefalschen Deckeln - erreicht die Erfindung eine im wesentlichen doppelte Leistungsfähigkeit.

Diejenigen Deckel, die lageverkehrt liegen, werden an der Sensor- und Austragseinrichtung nur aus der Laufrichtung des Bandes herausgeworfen, meist seitlich ausgestoßen, und fallen zurück in den beschriebenen Behälter, von wo sie erneut aufgenommen und zugeführt werden.

Das Ausstoßen der Deckel kann zweiseitig geschehen (Anspruch 4), orientiert an der Trenneinrichtung als beispielsweise dem Steg, an dem beide Deckelreihen parallel geführt vorbeilaufen. Von ihm ausgehend kann das Ausstoßen zur einen und zur anderen Seite, also zweiseitig erfolgen. Ein Ausblas-Druckluftstoß kommt dabei von der Bandmitte und wird von Düsen veranlaßt, die entgegengesetzt gerichtet sind. Sie sind fest an dem Steg angeordnet und verändern ihre Höhe relativ zur Oberfläche des Bandes für eine gegebene Größe/Höhe von Verschlußdeckeln nicht. Werden die geförderten Verschlußdeckel in ihrem Typ geändert, also entweder in ihrem Durchmesser oder in ihrer Höhe, kann an der Sensor- und Austragseinrichtung eine Einstellung erfolgen. Zumindest die Sensoren der Sensor- und Austragseinrichtung können dabei in einer Höhe verstellt werden, relativ zu der Oberfläche des Bandes (Anspruch 6, Anspruch 26). Durch die Höhenverstellung kann auch die Empfindlichkeit der Sensoren eingestellt werden.

Erprobungen haben gezeigt, daß Leistungserhöhungen auf bis zu 1500 Deckel/min mit der Fördereinrichtung nach Anspruch 1erreicht werden können, bei im wesentlichen gleicher Bandgeschwindigkeit einer Vergleichsanlage.

Das Austragen wird begünstigt, wenn die Sensoreinrichtung und die Austragseinrichtung auf jeweils einem der beiden benachbarten Förderabschnitte in Längsrichtung geringfügig beabstandet sind (Anspruch 5). Damit können Zeitverzögerungen bei der Erfassung eines lagefalschen Verschlusses durch den Sensor kompensiert werden, während das Förderband den vom Sensor erfaßten und gerade gemessenen Verschlußdeckel weiterbewegt.

Seitlich auskragende Führungsleisten können das Herauswerfen des Deckels führen und dafür sorgen, daß die seitliche Auswurfbewegung stetig in eine Abwärtsbewegung umgesetzt wird, ergänzt um die Schwerkraft, so daß die lagefalsch liegenden Deckel in das Sammelbehältnis zurückgeführt werden.

Sind die Sensoren relativ zur Bandoberfläche in ihrer Höhenlage verstellbar, kann die Fördervorrichtung an unterschiedliche Deckel in der Höhe angepaßt werden (Anspruch 6). Es können auch unterschiedliche Deckeldurchmesser zwischen beispielsweise etwa 27 mm bis beispielsweise etwa 53 mm von derselben Anordnung gefördert werden, die in dem förderbaren maximalen Durchmesser lediglich dadurch begrenzt wird, daß die verbleibenden Bandabschnitte auf beiden Seiten des Steges noch so breit sein sollten, die flächigen Seiten (die ferromagnetischen Deckwände) der Deckel aufnehmen zu können und durch Reibkraft zu fördern, wobei Magnete vorgesehen sind, welche mit ihrer Magnetkraft die Deckel auf die Oberfläche des Förderbandes drücken (Anspruch 7). Eine Einstellung des Abstandes des langgestreckten Magnets kann die Kraft beeinflussen (Anspruch 31), die auf die ferromagnetischen Deckel einwirkt.

Im einem Zusammenführungsbereich ist ein gegenüber der Längsachse des Bandes geneigter langgestreckter Magnet vorgesehen, der das Zusammenführen begünstigt (Anspruch 9). Er geht aus von dem Ende des ersten langgestreckten Magneten (Anspruch 32,33), der im wesentlichen dort endet, wo die Sensor- und Austragseinrichtung angeordnet ist, und erstreckt sich bei vertikal stehender Vorrichtung schräg aufwärts in Richtung zu einem Rand des Förderbandes hin. Beide-von falsch liegenden Verschlüssen-gereinigten Reihen von Verschlüssen werden durch diese schräg liegende Magnetführung zusammengeführt und erreichen das Auslaufende. Die Zusammenführung erfolgt auf demselben Förderband, auf dem auch die Zuführung zu der Sensor- und Austragseinrichtung erfolgte, nur nach letzterer (Anspruch 24,25). Ohne Zwischenschaltung weiterer Förderbänder oder Umlenkstellen für die geförderten Verschlußdeckel wird das Zufördern der nicht einheitlichen Deckelreihen und das Zusammenführen von nur lagerichtigen Deckelreihen auf kleinem Raum bzw. kurzer Länge (Anspruch 11,12) erreicht.

Ein weiteres Führungsglied kann hier Unterstützung leisten und das Ausbilden der Reihe aus dicht aufeinander folgenden Verschlüssen verbessern (Anspruch 15). Es ist vor dem Auslauf angeordnet und im Abstand von der Sensor- und Austragseinrichtung. Es hat eine zur Band-Längsachse bzw. Mittelebene geneigte Führungsfläche oder -kante und ist um ein Drehlager in einem kleinen Schwenkwinkel verschwenkbar, abhängig von einem Druck, der von den - im Zusammenführungsbereich - zugeförderten mehreren Verschlußdeckeln auf das Führungsglied ausgeübt wird (Anspruch 35,36).

Das Führungsglied am Auslaufende ist mit einer Federkraft vorgespannt (elastisch nachgiebig), so daß ein Auslenken eine Erhöhung der Federkraft bewirkt (Anspruch 19), um ggf. verklemmte Deckel am spitzen Ende (Nasenende) des Führungsglieds zu lösen und sie entweder zu solchen Deckeln zu machen, die in einen Einlauftrichter zu der Reihe von dicht aufeinander folgenden Deckeln einlaufen oder zu solchen Deckeln zu machen, die an einer Ablenkkante (Anspruch 22) dieses Führungsgliedes entlanggleiten und von dem Förderband seitlich herausgelenkt werden, um auch in das Sammelbehältnis zurückzufallen.

Das Führungsglied nach der Sensor- und Austragseinrichtung führt die mehreren getrennten Reihen in einem Zusammenführungs-Abschnitt in die Reihe aus dicht aufeinanderfolgenden Verschlüssen zusammen (Anspruch 37).

Die langgestreckte Magnetvorrichtung im Zusammenführungsbereich (Anspruch 9, Anspruch 24) und/oder die langgestreckte Magnetvorrichtung in dem vorgelagerten Bereich (Anspruch 7), welche vorgelagerte Magneteinrichtung bis in den Sensor- und Austragsbereich reicht, können aus einzelnen Stückmagneten zusammengesetzt sein, die in eine langgestreckte, flächige Traganordnung eingesetzt sind. Dadurch entsteht eine langgestreckte Magnetvorrichtung, welche die einzelnen Einzelmagnete gegeneinander fixiert (Anspruch 27).

Durch die Position der Aufnahmestellen in der Traganordnung werden Bahnabschnitte (Führungslinien) definiert, die jeweils aus Einzelmagneten bestehen. Zumindest einer dieser Bahnabschnitte ist gegenüber einer Mittelebene des Förderbandes geneigt, um die geneigte langgestreckte magnetische Vorrichtung zu bilden (Anspruch 28,29). Diese Neigung bezieht sich auf den Zusammenführungsbereich, wo aus mehreren Reihen von Verschlussdeckeln eine Reihe gebildet wird, was weichenartig durch Vorgabe der einzelnen Magnete entlang - zu einer Vertikalen (bspw. der Mittelebene) - unterschiedlich geneigter Führungslinien erfolgt.

Auch vor dem Zusammenführungsbereich kann die langgestreckte Magnetvorrichtung aus zwei beabstandeten Reihen von Einzelmagneten bestehen, die so angeordnet sind, daß jeweils eine Reihe diesseits und jenseits des Steges liegt und unterhalb des Förderbandes angeordnet ist (Anspruch 30).

Die Erfindung wird an Ausführungs**beispielen** erläutert und ergänzt.
- **Figur 1**: ist eine schematische Ansicht eines ersten Abschnitts 2, 3 der Fördereinrichtung.
- **Figur 2**: ist eine schematische Ansicht eines zweiten Abschnitts 4, 5 des Förderbandes, oberhalb von Figur 1.
- **Figur 3**: ist eine vollständige Ansicht der vertikal aufgerichteten Fördereinrichtung mit Abschnitten 1 bis 6.
- **Figur 4**: veranschaulicht schematisch langgestreckte magnetische Vorrichtungen 50,51, die im oberen Teilabschnitt 3 des ersten Abschnitts 2,3 und im unteren Teilabschnitt 4 des zweiten Abschnitts 4,5 unterhalb des Förderbandes angeordnet sind. Die hier kreisförmigen Magnetstücke sind keine Verschlußdeckel, wie sie in den Figuren 1 bis 3 veranschaulicht worden sind.
- **Figur 5**: ist ein Schnitt in Richtung der Mittelebene entsprechend dem Bahnverlauf 56, wobei oben das Förderband 10 und unten eine langgestreckte Trageinrichtung 53 mit den in Figur 4 erkennbaren Magnetstücken detaillierter dargestellt werden.
- **Figur 6**: ist eine schematische Ansicht der Abstandsrelationen der Magnetstücke, bezogen auf einen zu fördernden Verschlußdeckel D.

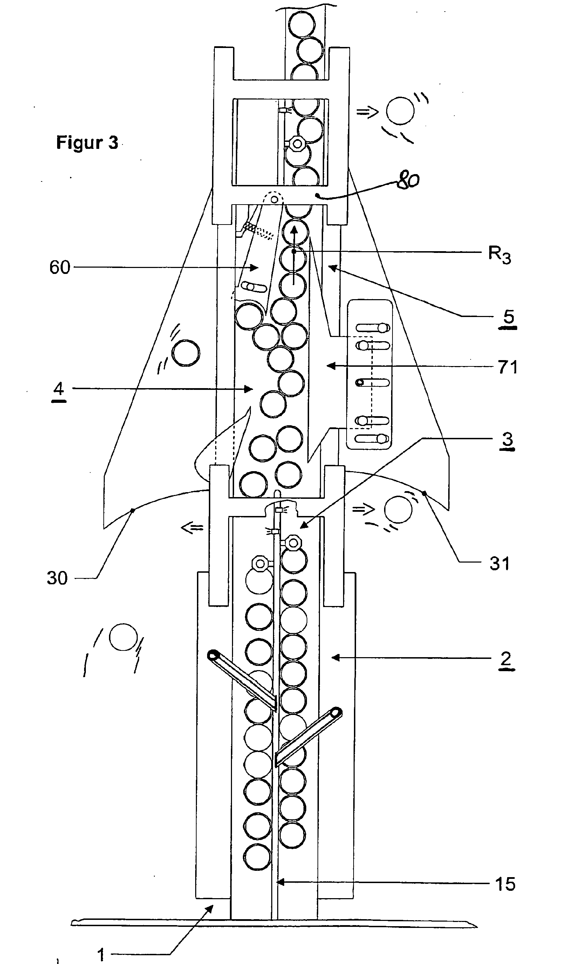

Die Vorrichtung zur Förderung der metallischen Verschlußdeckel arbeitet vertikal, wie an einem Beispiel der **Figur 3** ersehen werden kann. Ausgehend von einem unten liegenden - nicht näher dargestellten - Behälter im Abschnitt 1 der Fördereinrichtung, in den ein Endlos-Förderband 10 greift, werden Verschlußdeckel D entlang zweier Bahnen auf dem Endlos-Förderband 10 aufwärts bewegt. Etwa auf der mittigen Höhe befindet sich im Abschnitt 3 eine kombinierte Sektion aus Sensoren 17,19 und Austragseinrichtungen 16,18, die als Metallsensoren bzw. Blasdüsen für Druckluftausstoß ausgebildet sein können. Ein Steg 15 reicht bis in den Sammelbehälter und liegt oberhalb der Oberseite des oberen Fördertrums des Förderbandes 10. Der Steg erstreckt sich bis in den Abschnitt 3 hinein, wo die Sensorund Austragseinrichtung angeordnet ist. Oberhalb des Abschnitts 3 beginnt der Sammelabschnitt 4, in dem Verschlußdeckel ohne eine Stegausbildung zusammengeführt werden, hin auf einen Einlauftrichter, der im Abschnitt 5 gebildet wird.

In der Figur 3 ist links vom Einlauftrichter ein bewegliches Führungsglied gezeigt, dessen Schwenkachse unterhalb eines Tragbügels 80 angeordnet ist. Nach dem Trichterabschnitt 5 ist ein Auslaufabschnitt 6 angeschlossen, der eine Reihe aus dicht aufeinanderfolgenden Verschlüssen abgibt, die aufwärts bewegt werden, ggf. danach umgelenkt werden und ihrer Verwendung oder Anwendung oder Weiterverarbeitung zugeführt werden.

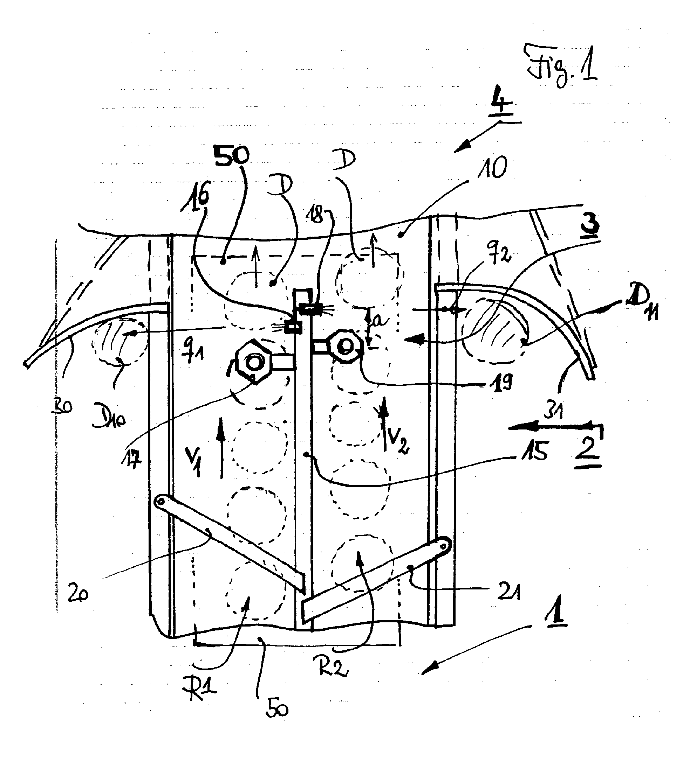

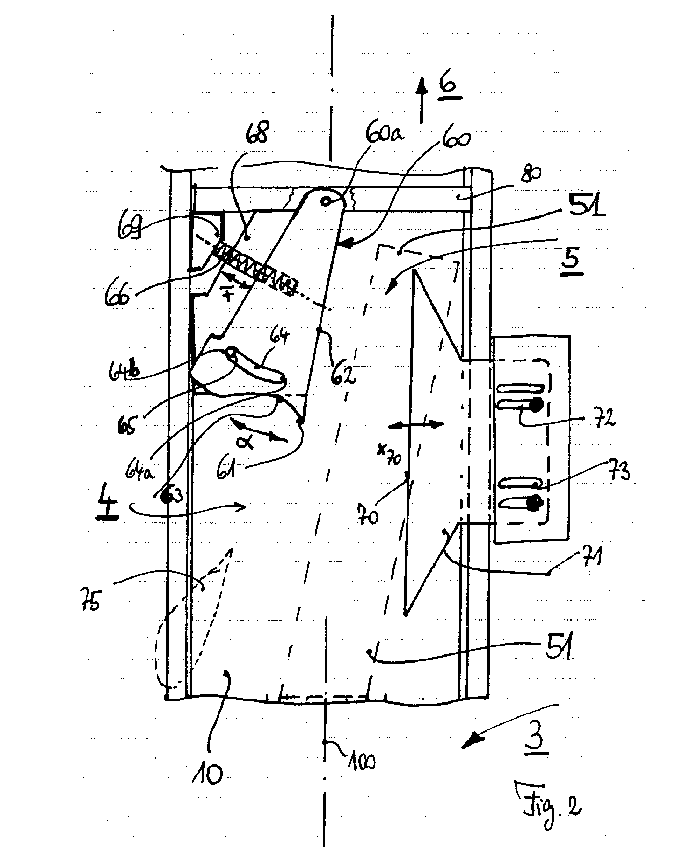

Der untere Abschnitt 2,3 oberhalb der Sammelstelle 1 im Behälter ist in **Figur 1** dargestellt. Der obere Abschnitt 4,5, beginnend nach der Sensor- und Austragseinrichtung 3 (bzw. dem Abschnitt 3 der Förderstrecke) ist in **Figur 2** veranschaulicht.

Aus Figur 3 sind lagerichtige und lageverkehrte Deckel ersichtlich. Ein lage**falscher** Verschluss ist so gelegen, dass die Umfangswand zum Förderband zeigt und in der Aufsicht von Figur 3 die äußere Oberfläche der Deckwand des Verschlusses zu sehen ist. Ein lage**richtiger** Verschluss so gelegen ist, daß die Deckwand des jeweiligen Verschlusses auf dem Förderband liegt, auf welches die Deckwand durch eine magnetische Anziehungskraft einer Einrichtung 50 gedrückt wird, die unterhalb des oberen Trums des Förderbandes angeordnet ist. Die Umfangswand ist als Randlinie nach oben zum Betrachter zeigend in Figur 3 ersichtlich. Aufgrund der Reibungskraft zwischen einem jeweiligen Verschlußdeckel und der Oberfläche des Förderbandes kann durch das Andrücken eine Transportkraft (vermittels der über µ_{R} gebildeten Reibungskraft) übertragen werden. Gleichwohl rutschen die Deckel auch auf dem Förderband, wenn sie aneinander anstoßen oder an Hindernisse geraten, wie das in Figur 3 im Abschnitt 4 am Einlauf des Trichterabschnitts 5 gezeigt ist. Hier stoßen mehrere Deckel aneinander und drängeln sich in den Einlauf herein, wobei auch solche Deckel gezeigt sind, die seitlich ausgeworfen werden, weil sie vom Trichterabschnitt aufgrund der Übermenge der angebotenen (herantransportierten) Deckel nicht mehr aufgenommen werden können.

Das Band nach Figur 1 bewegt sich aufwärts. Diesseits und jenseits des Steges 15 ist je eine von zwei Reihen R1, R2 von Verschlußdeckeln D zu sehen, wie mit Figur 3 veranschaulicht. Alle beiden Reihen liegen auf demselben Förderband und werden entsprechend der Geschwindigkeit des Bandes aufwärts bewegt. Sie erreichen die Sensoren 17 bzw. 19, welche detektieren, ob ein jeweils unter ihnen befindlicher Verschlußdeckel lagerichtig oder lageverkehrt liegt. Liegt er mit der Deckwand nach oben zum Sensor zeigend, so wird die zu einem jeweiligen Sensor gehörende Austragseinrichtung aktiviert, um diesen Deckel seitlich auszuwerfen. Das geschieht durch Aktivieren eines kurzen Luftimpulses, der für die Reihe R1 in einer Auslenkung q1 des Deckels D10 resultiert, der von einem Führungselement 30 seitlich geführt und nach unten abgelenkt wird, um in den Behälter 1 zu fallen. Gleiches geschieht mit der zweiten Reihe R2 und dem hier angeordneten Sensor 19 und dem davon in einem Abstand vorgesehenen Ausstoßer 18, der auch druckluftbetrieben sein kann. Detektiert der Sensor 19 einen fehlerhaft liegenden Verschlußdeckel, aktiviert eine Düse 18 einen Ausstoßimpuls q2, der zum seitlichen Herausdrücken des Deckels D11 führt. Dieser Deckel wird durch eine Ablenkeinrichtung 31, entsprechend derjenigen Ablenkeinrichtung 30, umgelenkt und nach unten in den Behälter 1 zurückgeworfen.

Oberhalb der beiden langgestreckten Führungsbahnabschnitte diesseits und jenseits des Steges 15 sind zwei Abstreifer 20,21 vorgesehen, die aufeinanderliegende Deckel abstreifen, so daß nur eine Lage von Deckeln, aber mehrere Stränge (oder Reihen) von Deckeln aufwärts bewegt werden.

Nach dem Ende des Steges 15 können die beiden von falsch liegenden Deckeln bereinigten Reihen R1, R2, hier symbolisiert mit den Deckeln D zusammengeführt werden, um eine einzige Reihe von Deckeln zu ergeben, was in den Abschnitten 4 und 5 der Förderstrecke geschieht. Dazu ist auf die Erläuterungen zu **Figur 2** zu verweisen.

Zuvor soll noch erläutert werden, daß die beiden Austragseinrichtungen 16,18 nach außen gerichtet sind, also entgegengesetzt arbeiten, um die lagefalschen Verschlußdeckel auszutragen. Diese fallen - abhängig von der Zusammensetzung der Reihen R1, R2 - zu der einen oder anderen Seite des Förderbandes heraus, wie es anschaulich auch in Figur 3 durch zwei herabfallende Deckel unterhalb der beiden Führungen 30,31 gezeigt ist.

Der Abstand "a" kann für Sensor und Austragseinrichtung auf beiden Seiten des Steges 15 gleich sein. Mit ihm wird eine Verzögerung kompensiert, die im wesentlichen der Laufzeit der Deckel zwischen der Sensorstelle und dem Ort des Austragens entspricht.

Zur Anpassung an unterschiedliche Höhen der geförderten Deckel können die Sensoren mit einer Einstelleinrichtung am Steg 15 höhenverstellbar sein, bezogen auf die Oberfläche des Förderbandes. Die Austragsköpfe 18,16 dagegen sind auf einer festen Höhe an dem Mittelsteg 15 gehalten.

Die Magnetvorrichtung 50 ist in Figur 1 angedeutet, als unterhalb des Obertrums des aufwärts laufenden Förderbandes gelegen. Ihr Abstand (vom Band) kann eingestellt werden, um die Magnetkraft auf die Deckel zu verändern und damit die Menge der geförderten Deckel. Die Magnetvorrichtung 50 ist langgestreckt und hat eine Breite, die ausreichend ist, die im Durchmesser vorgegebenen Verschlüsse so magnetisch anzuziehen, daß die Reibungskraft des Bandes für eine Förderung ausreicht. Aufgrund der zweibahnigen Förderung erstreckt sich die Magnetvorrichtung auf beide Seiten des Steges 15. In Längsrichtung erstreckt sie sich bis zur Austragseinrichtung und ggf. ein Stück darüber hinaus, so daß eine Anschluß-Magnetvorrichtung 51, die sich aus Figur 2 ergibt, keinen zu großen Spalt beläßt, um eine kontinuierliche Förderung der Verschlußdeckel zu ermöglichen. Das Endes des Steges 15 ist in Figur 1 nach dem obersten der Austragselemente 18,16 vorgesehen. Dieses Ende kann in seiner genauen Position leicht verändert werden, es sollte im Bereich der Sensor- und Austragseinrichtung liegen und sich nicht zu weit in den Zusammenführungsabschnitt 4 erstrecken, in dem die durch den Steg 15 zuvor getrennten Deckel zusammengeführt werden sollen. Auch die Anschluß-Magnetvorrichtung 51 ist in ihrem Abstand (vom Förderband) einstellbar, um die Magnetkraft auf die geförderten Deckel zu verändern.

Die eingezeichneten Geschwindigkeiten v1 für die erste Reihe R1 der Verschlüsse und v2 für die zweite Reihe R2 der Verschlüsse sind gleich, nachdem beide Verschlüsse auf dem selben Förderband liegen, nur anfangs physisch getrennt von der als Steg ausgebildeten Trenneinrichtung 15, welche die Bandoberfläche nicht berührt, sondern oberhalb von ihr angeordnet ist.

Im Anschluß an die Figur 1 und dessen oberes Ende schließt sich der Abschnitt 4 von **Figur 2** an. Im Zusammenführungsabschnitt 4 ist kein Mittelsteg vorgesehen, vielmehr die Bandfläche des Förderbandes 10 frei. Ein schräg gegenüber einer Mittelebene 100 des Bandes geneigt ausgerichtetes Magnetfeld von einer langgestreckten Magnetvorrichtung 51 führt die metallischen Verschlüsse, bzw. drückt sie an das Förderband, welches sie aufwärts durch Reibungskraft bewegt. Gleichzeitig werden die Verschlüsse seitlich abgelenkt durch die Ausrichtung der Magnetvorrichtung 51. Ihre Fördergeschwindigkeit v3 entspricht im wesentlichen der Bandgeschwindigkeit und denjenigen Geschwindigkeiten v₁,v₂, die für die erste und zweite Reihe R₁,R₂ beschrieben war.

Die Magnetvorrichtung 51 schließt im wesentlichen an das obere Ende der vorhergehenden Magnetvorrichtung 50 an, ist aber deutlich schmäler, bevorzugt im wesentlichen halb so breit. Die Magnetvorrichtung mündet in einen Einlauf, der links von einem Führungsglied 60 und rechts von einer Kante 70 gebildet wird, die von einem langgestreckten Führungsglied oder -leiste 71 ausgebildet ist. Dieses Führungsglied 71 ist in Querrichtung x₇₀ verstellbar, um die Führungskante 70 im Abstand von dem schwenkbaren linken Führungsglied 60 zu verändern.

In den Einlauftrichter zwischen der nach links weisenden Kante 70 der Führungsleiste 71 und der nach rechts weisenden Kante 62 des Führungsgliedes 60 hinein reicht die Magnetvorrichtung 51, die unterhalb des oberen Trums des Förderbandes 10 angeordnet ist. Sie kann in ihrer Lage (Neigung) gegenüber der Mittelebene 100 des Förderbandes verändert werden, um sich an Veränderungen der Lage des Führungsgliedes 60 und der Einstellung der Führungsleiste 70 anzupassen.

Das Führungsglied 60 links von der Magnetvorrichtung 51 ist an einem Schwenklager 60a schwenkbar gelagert. Es weist die zuvor beschriebene schräg gegenüber der Mittelebene orientierte innere Kante 62 auf und eine geschwungen verlaufende vordere Kante 63, die je nach Höhe des Führungsgliedes als Kante oder als Steg oder als Flächenabschnitt ausgebildet sein kann. Diese Führungskante ist so gewölbt, daß ein an einem vorderen Nasenabschnitt 61, der leicht abgerundet ist, anstoßender Verschluß entweder in den Einlauftrichter hereingedrückt wird, oder über die Ablenkkante 63 nach außen vom Förderband 10 abgelenkt wird, um in den Behälter 1 zurückzufallen.

Je nach Anzahl der sich in den Einlauftrichter hineindrängelnden Verschlüsse, bildet sich eine Druckkraft auf das schwenkbare Führungsglied 60 aus, das über eine Federeinrichtung 66 eine Reaktionskraft ermöglicht. Steigt die Druckkraft entweder auf den Nasenabschnitt 61 oder die innere Führungskante 62, so wird das Führungsglied ausgelenkt, um den Einlauftrichter in seiner Mündung zu verändern. Eventuell blockierende Verschlüsse am Einlauf, so wie sie beispielsweise in der Figur 3 gezeigt sind, können gelockert werden und das Einfädeln der Verschlüsse in die angestrebte Reihe aus dicht aufeinanderfolgenden Verschlüssen wird erleichtert. Ein Klemmen am Einlauftrichter kann vermieden werden, wobei der Einlauftrichter aufgrund der Ausrichtung der beiden ihn bildenden Kanten 70,62 breiter beginnt und nach oben schmäler wird, um zum Auslaufbereich 6 hin seine geringste Breite aufzuweisen.

Um den Bewegungsspielraum des im Winkel α schwenkbaren Führungsgliedes 60 einzuschränken, ist eine Führung 64 vorgesehen, die zwei Endanschläge besitzt, für eine innere und eine äußere Ruhelage. Ein Zapfen 65 ist in der Führung 64 plaziert, so daß ein Schwenken des Führungsgliedes 60 an einen der beiden Enden 64a,64b des gebogenen Schlitzes 64 einen jeweiligen Endanschlag definiert. Dargestellt ist der innere Endanschlag oder die Ruhelage, bei der keine Kraft von den Deckeln auf das Führungsglied 60 ausgeübt wird und deshalb auch keine Federkraft F von der Federeinrichtung 66 als (elastisch nachgiebige) Gegenkraft entsteht.

Bei stärkerem Druck weicht das Führungsglied 60 um einen kleinen Winkel aus, der bis zu 30°, bevorzugt im Bereich zwischen 12° und 20° angesiedelt ist.

Eine Platte 68 ist unterhalb des langgestreckt dreieckförmig wirkenden Führungsgliedes 60 angeordnet, auf dem es gleitend mit seiner Schwenkbewegung beweglich ist. Ein gegenüber angeordneter erhabener Anschlag 69 dient der Aufnahme der Federeinrichtung 66 und ihrer Abstützung relativ zu dem schematisch dargestellten Bandkörper, der beidseitig das Förderband 10 begrenzt.

Der Nasenabschnitt 61 dient der Scheidung derjenigen Verschlüsse, die noch zum Verschlußstrang zugeführt bzw. ausgerichtet werden und derjenigen Verschlüsse, die von der Förderbahn abgelenkt und an der Seite heruntergeworfen werden. Gegenüber der dazu ausgebildeten Ablenkkante 63 ist das Schwenklager 60a im spitzen Winkel des dreieckförmig wirkenden Führungsgliedes 60 angeordnet. Zur Verdeutlichung des Anbringungsortes des Schwenklagers ist der tragende Steg 80 im Bereich des Lagers weggebrochen dargestellt. In entsprechender Weise ist in Figur 3 das Lager 60a strichliniert unterhalb dieses tragenden Steges eingezeichnet.

Die ebenfalls vorgesehene Verstellung der zweiten Führungs-Seitenkante 70 an der Führungsleiste 71 erfolgt durch Langlöcher und Bolzen 72,73, jeweils angepaßt an einen aktuellen Durchmesser von geförderten Verschlußdeckeln.

Am oberen Ende nahe des Übergangs zwischen dem Einlauftrichter 5 und dem Abförderabschnitt 6 kann eine weitere Sensor- und Ausblasanordnung angeordnet sein, wie sie anhand der Einrichtungen 18,19 erläutert war. Hier erfolgt eine Sicherheitsüberprüfung und solche Verschlüsse, die in seltenen Fällen in verkehrter Lage bis zu dieser Stelle gelangt sind, werden seitlich ausgeworfen und fallen von hier in den Behälter 1 zurück. Der Auswurf geschieht in gleicher Weise, wie anhand der als Bahnen wirkenden Führungen 30, 31 im Bereich 3 erläutert.

Auch ein zusätzliches Führungselement 75 kann gegenüber der Führungsleiste 71 auf der anderen Seite des Bandes und näher zum Sensor- und Austragbereich 3 angeordnet sein, um als Sicherheitsführung zu dienen.

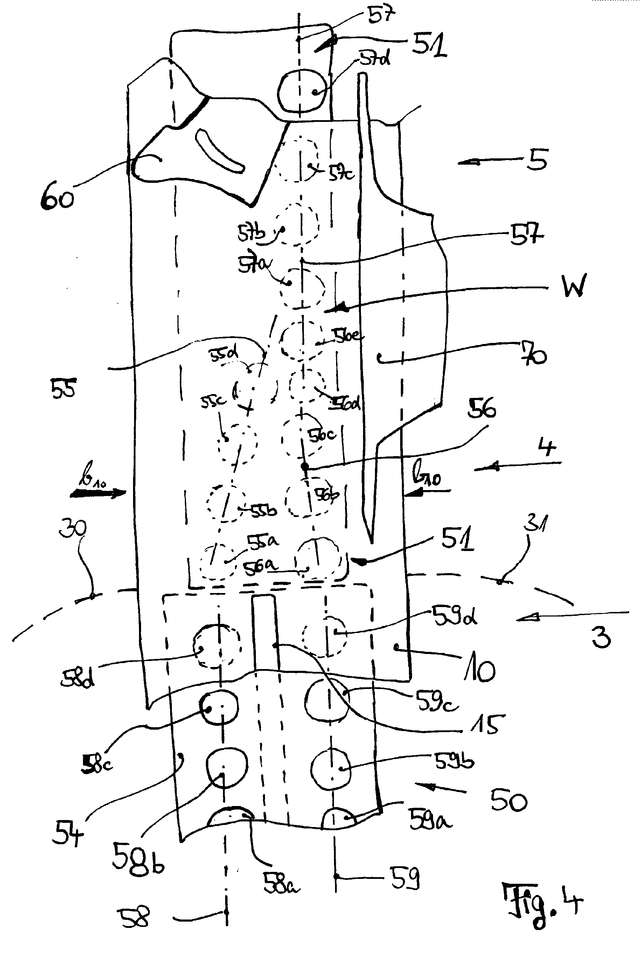

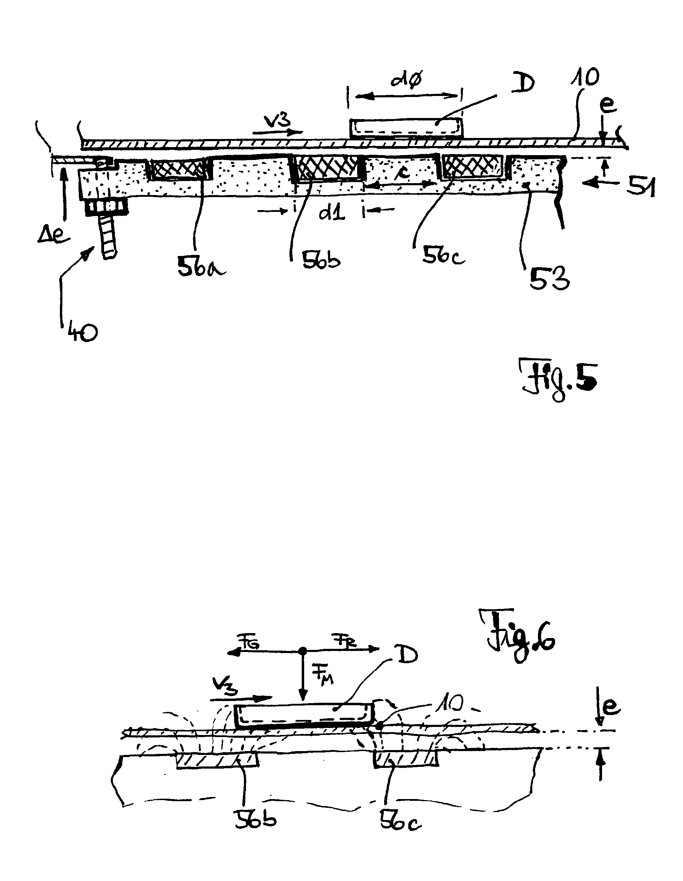

Zu den beschriebenen lateralen Führungen 71,60 sowie 75 kann auch die langgestreckte Magnetvorrichtung 51 einen Beitrag zum Zusammenführen der in mehreren Reihen aufwärts geförderten Verschlußdeckel liefern. Dazu war bereits beschrieben, daß die langgestreckte Magnetvorrichtung die Verschlüsse während ihrer Bewegung v₃ seitlich ablenken kann. Diese seitliche Ablenkung kann verstärkt werden, wenn die Magnetvorrichtung zwar weiterhin als langgestreckte Magnetvorrichtung ausgebildet ist, aber eigenständige Magnetbahnen definiert, wie sie aus der **Figur 4** deutlich werden. Auch hier dient die langgestreckte Magnetvorrichtung 51, die im Bereich 5 bei weggebrochen dargestelltem Förderband 10 in Aufsicht zu erkennen ist und im übrigen Bandverlauf bis zu dem Abschnitt 3 herabreichend in strichlinierter Darstellung unter dem Förderband 10 gelegen ist, der seitlichen Heranführung. In Figur 4 sind eine Vielzahl von Einzelmagneten zu erkennen, die zylindrische Gestalt aufweisen. Sie sind im Abstand voneinander angeordnet und bilden durch ihre Aneinanderreihung Bahnen 55,56,57, die als Verbindungslinien der jeweiligen Mitten der zylindrischen Magnete angesehen werden können. Die Einzelmagnete selbst sind dabei in einem nicht-magnetischen Träger 53 gehalten, der aus **Figur 5** ersichtlich ist. Er ist unterhalb des Förderbandes angeordnet und weist Aufnahmen auf, in welche die zylindrischen Magnete eingesetzt und damit in ihrer relativen Lage zueinander fixiert sind. Die nicht-magnetische Tragplatte 53 hat einen Abstand e von der Unterseite des Förderbandes 10, das in Figur 5 mit einem als Beispiel dienenden Deckel D (bei einem Durchmesser d0) erkennbar ist.

Aus Figur 4 ist die Bahn 56 erkennbar, die in der Figur 5 im Schnitt dargestellt ist. Die Aneinanderreihung der zylindrischen Magnete 56a,56b,56c,56d,56e ergibt eine Fortsetzung der Bahnführung der rechten Reihe R2, die in der Figur 4 als Bahn 59 wiedergegeben ist. Die gegenüber dem Bahnabschnitt 56 geneigt verlaufende zweite Bahn 55 aus den Magneten 55a,55b,....55d fördert die von falsch liegenden Verschlüssen bereinigten Verschlußdeckel der linken Reihe R1 in einen Weichenabschnitt im Zusammenführungsbereich 4, an den sich die Bahn 57 anschließt, die im wesentlichen parallel zu der Bahn 56 verläuft. Auch hier sind Einzelmagnete im Abstand voneinander in der Tragplatte 53 eingesetzt, so daß die Mitten der Magnete 57a bis 57d die Bahnführung der Führungslinie 57 ergeben.

Die Bahnabschnitte 55,56 und 57 können auch gegeneinander andere Neigungen aufweisen, wenn sie gemeinsam im Zusammenführungs-Bereich einen Schnittpunkt besitzen, in dem die Deckel aus den beiden Reihen R₁ und R₂ zusammengeführt werden, um in den Trichtereinlauf zwischen dem schwenkbaren Führungsglied 60 und der rechten Führungsleiste 71 eingeführt zu werden. Im dargestellten Beispiel der Figur 4 ist erkennbar, daß die Führungslinie 56 der Einzelmagnete 56a bis 56e im Anfang eine leichte Neigung gegenüber der Mittelebene des Förderbandes 10 aufweist. Zumindest zwei der Förderrichtungen 55 bis 57 haben unterschiedliche Neigungen gegenüber der beschriebenen Mittelebene 100.

In gleicher Weise kann auch die langgestreckte Magnet-Vorrichtung 50, welche in den Sensor- und Austragsbereich 3 hineinreicht, ausgebildet sein. Bei ihr sind die Führungsrichtungen 58,59 als Verbindung der Mitten der Einzelmagnete aber parallel ausgerichtet und weisen keinerlei Neigung zueinander auf. Die Einzelmagnete 58a bis 58d bilden die Förderrichtung 58 links von dem Mittelsteg 15, während die Einzelmagnete 59a bis 59d die Förderrichtung 59 rechts von dem Mittelsteg 15 verdeutlichen. Aufgrund des weggebrochen dargestellten Bandabschnitts 10 ist die langgestreckte Fördereinrichtung 50 in Aufsicht ersichtlich. Auch sie weist eine langgestreckte Trageinrichtung 54 auf, in welche die Magnete so eingesetzt sind, wie das mit Figur 5 zur langgestreckten Fördereinrichtung 51 beschrieben war.

Zu der Anordnung, Positionierung und relativen Ausrichtung der Einzelmagnete kann auf **Figur 5** und **Figur 6** verwiesen werden.

Ein ferromagnetisch wirkender Deckel, der von den Einzelmagneten 56b,56c angezogen wird, hat einen solchen Durchmesser d0, daß immer zumindest einer, bevorzugt beide Magnete in einem Zwischenbereich auf ihn Einfluß nehmen können, um die Kraft F_{M} während der Förderung in einer solchen Höhe (Betrag) sicherstellen zu können, daß bei einer Aufwärtsbewegung gemäß den Figuren 1 bis 4 die Gewichtskraft F_{G} nicht größer wird, als die entgegengesetzt wirkende Reibungskraft F_{R}, welche bei Haftreibung proportional zur Anziehungskraft F_{M} ist. Der zur Einstellung dieser Kraft verwendete Abstand "e" kann über die Einstellvorrichtung 40 mit Δe vorgegeben werden.

Der Abstand "c" der einzelnen Magnete in der Tragplatte 53 nach Figur 5 ist so bestimmt, daß er nicht größer, bevorzugt sogar etwas kleiner sein sollte, als der kleinste zu fördernde Deckeldurchmesser d. Der Durchmesser d1 der einzelnen Magnetstücke ist bezogen auf die Bandbreite b₁₀ relativ klein, beispielsweise unter 15%, so daß eine große Freiheit der Positionierung der einzelnen Magnetstücke besteht.

Sie können entlang der Bahnen 55,56 und 57, ggf. auch 58 und 59, jeweils bezeichnet als Förderrichtung oder Förderlinie, auch gegeneinander versetzt angeordnet sein, um der zylindrischen Form Rechnung zu tragen und den Abstand zu reduzieren, den die zunächst liegenden Ränder der Magnetstücke besitzen, wie in Figur 5 mit dem Abstand c verdeutlicht.

Haben die einzelnen Magnetstücke ausreichende Anziehungskraft, so kann die durch Zugkraft F_{M} aufgebrachte Bahnführung und seitlich aufeinander zu orientierte Führung der Deckel im Zusammenführungsbereich praktisch alleine durch die Einzelmagnete erreicht werden, ohne daß wesentliche laterale Führungselemente nötig sind. Beispielsweise die Sicherheitsführung 75 könnte entfallen.

Die einzelnen Bahnabschnitte 55,56,57, ihre Neigung zueinander und eine jeweils vorgegebene bestimmte Länge der einzelnen Abschnitte leisten dabei einen wesentlichen Beitrag zur Zusammenführung der parallelen Reihen R₁,R₂ in eine Gesamtreihe R₃ zur Einführung in den Trichterabschnitt und Weiterleitung an den Auslaufabschnitt 6.

## Patentansprüche

1. Vorrichtung zur Förderung von Verschlüssen (D) aus metallischem Blech in einer im wesentlichen vertikalen Richtung von einer Sammelstelle (1) zu einer Abgabestelle (6),
wobei die Verschlüsse während der Förderung lagerichtig selektiert werden, um an der Abgabestelle (6) nur gleich liegende Verschlüsse in einer Reihe aus dicht aufeinanderfolgenden Verschlüssen abzugeben;
mit einem Förderband (10) zum Transport (v1,v2) der Verschlüsse und mit einer Sensor- und Austragseinrichtung (17,16,19,18;3) zum Erfassen lagefalscher Verschlüsse und zum seitlichen Austragen (q1,q2) einzelner lagefalscher Verschlüsse;
***dadurch gekennzeichnet, daß***
im Zuge des Förderbandes (10) vor der Sensor- und Austragseinrichtung (17, 16,19,18;3) ein Steg (15) oberhalb des Förderbandes angeordnet ist, der nach der Sensor- und Austragseinrichtung (17,16,19,18;3) endet, um
- mehr als eine Reihe (R1,R2) von Verschlüssen nebeneinander der Sensor- und Austragseinrichtung (17, 16,19,18;3) getrennt zuzuführen;
- an der Sensor- und Austragseinrichtung (17,16,19,18;3) lagefalsche Verschlüsse aus mehreren Reihen (R₁,R₂) auszutragen;
- nach der Sensor- und Austragseinrichtung (17, 16,19,18;3) die mehreren Reihen (R1,R2) in die Reihe aus dicht aufeinanderfolgenden Verschlüssen im Zuge des Förderbands (10) zusammenzuführen.

2. Vorrichtung nach Anspruch 1, wobei das Förderband (10) ein umlaufendes Endlos-Förderband ist.

3. Vorrichtung nach Anspruch 1, wobei der Steg oberhalb einer für den Transport der Verschlüsse geeigneten Oberfläche des Förderbandes angeordnet ist, insbesondere in einer festen Höhe gegenüber der Oberfläche des Förderbandes.

4. Vorrichtung nach Anspruch 1, wobei die Austragseinrichtung der Sensor- und Austragseinrichtung (3) zumindest zwei Austragsköpfe (16,18) besitzt, die in entgegengesetzt weisende Richtungen ausgerichtet sind, zum Austragen lagefalscher Verschlüsse zu beiden Seiten des Förderbandes (10).

5. Vorrichtung nach Anspruch 1 oder 4, wobei die Sensoreinrichtung und die Austragseinrichtung (3) in Längsrichtung des Förderbandes beabstandet angeordnet sind (a).

6. Vorrichtung nach Anspruch 1, wobei die Sensoren der Sensor- und Austragseinrichtung (17,16,19,18;3) gegenüber dem Steg (15) oder gegenüber dem Förderband (10) höhenverstellbar sind.

7. Vorrichtung nach Anspruch 1, wobei unter dem Förderband bzw. unter dem einen Trum des Förderbandes (10) eine langgestreckte Magnetvorrichtung (50;58,59) angeordnet ist, die bis zur Sensor- und Austragseinrichtung (17,16,19,18;3) reicht und in deren Bereich endet, sowie eine Breite aufweist, die bezogen auf das Förderband so gestaltet ist, daß sie sich diesseits und jenseits des Stegs (15) erstreckt.

8. Vorrichtung nach Anspruch 7 oder 1, wobei der Steg (15) als Mittelsteg ausgebildet ist, so daß diesseits und jenseits, insbesondere links und rechts des Steges ein im wesentlichen gleich breiter Bandabschnitt des Förderbandes (10) verbleibt.

9. Vorrichtung nach Anspruch 1, wobei an die Sensor- und Austragseinrichtung (17,16,19,18;3) anschließend ein Zusammenführungsbereich (4,5) vorgesehen ist, zum Zusammenführen der mehreren Reihen (R1,R2) von Verschlüssen und zum Ausbilden der Reihe aus dicht aufeinanderfolgenden Verschlüssen.

10. Verfahren zum Fördern von Verschlüssen aus Metallblech (D) in einer im wesentlichen vertikalen Richtung von einer Sammelstelle (1) zu einer Abgabestelle (6), wobei die Verschlüsse während der Förderung durch eine Sensor- und Austragseinrichtung (17, 16, 19, 18; 3) lagerichtig selektiert werden, um an der Abgabestelle (6) gleich liegende Verschlüsse in einer Reihe aus dicht aufeinanderfolgenden Verschlüssen abzugeben,
**dadurch gekennzeichnet, daß**
(a) mehr als eine Reihe (R1,R2) von Verschlüssen nebeneinander der Sensor- und Austragseinrichtung (17,16,19,18;3) auf demselben Förderband (10) zugeführt werden;
(b) an der Sensor- und Austragseinrichtung (17, 16,19,18;3) lagefalsche Verschlüsse beidseitig ausgetragen werden.

11. Verfahren nach Anspruch 10, wobei die Verschlüsse auf getrennten Bahnen aber dem selben Förderband (10) zu der Sensor- und Austragseinrichtung (3) zugefördert werden, die Bahntrennung nach dieser Einrichtung aber aufgehoben wird.

12. Verfahren nach Anspruch 10, wobei zwischen Sensor- und Austragseinrichtung und der Abgabestelle (6) eine gegenüber einer Mittelebene (100) des Förderbandes (10) geneigt verlaufende Magneteinrichtung (51;55,56,57) angeordnet ist, und die lagerichtigen Reihen von Verschlußdeckeln auf dem selben Förderband (10) zusammenführt (55,56) werden.

13. Verfahren nach Anspruch 12, wobei die Magnetvorrichtung zur Einstellung an verschiedene Deckelgrößen in ihrem Schrägwinkel bzw. in ihrer Neigung gegenüber der Mittelebene eingestellt wird.

14. Verfahren nach Anspruch 10, wobei zwei Reihen von Verschlüssen auf einem Förderband (10), aber von einem in seiner Länge begrenzten Steg (15) getrennt der Sensor- und Austragseinrichtung (3) zugefördert werden.

15. Vorrichtung nach Anspruch 1, wobei im Abstand von der Sensor- und Austragseinrichtung (3) ein Führungsglied (60) schwenkbar angeordnet ist, das einen Nasenabschnitt (61) aufweist, welcher in Richtung auf die Sensor- und Austragseinrichtung weist.

16. Vorrichtung nach Anspruch 15, wobei das Führungsglied eine im wesentlichen dreiecksförmige, langgestreckte Gestalt besitzt und das Schwenklager bzw. eine Achse des Lagers in einem spitzen Winkel des Führungsglieds angeordnet ist, gegenüber dem Nasenabschnitt und nahe dem Auslauf (6).

17. Vorrichtung nach Anspruch 15 oder 16, wobei das Führungsglied eine Führungs-Seitenkante (62) aufweist, welche vom Nasenabschnitt ausgeht und gegenüber einer Längsebene des Förderbandes (10) geneigt ist, zur Definition eines Einlauftrichters für die Verschlüsse zwischen der Führungs-Seitenkante und einer Führungsleiste (70,71) am Rand des Förderbandes (10).

18. Vorrichtung nach Anspruch 17, wobei die Führungsleiste (70,71) verstellbar ist, zur Anpassung einer Breite des Einlauftrichters an unterschiedliche Durchmesser von Verschlußdeckeln.

19. Vorrichtung nach Anspruch 15, wobei das Führungsglied (60) elastisch nachgiebig gestützt ist (66) und die Stützkraft steigt, wenn das Führungsglied von einer Band-Mittelebene weg ausgelenkt wird.

20. Vorrichtung nach Anspruch 15, wobei das Führungsglied (60) für seine Schwenkbewegung zwei Grenzanschläge (65,64a,64b) aufweist, zur Festlegung eines maximalen Schwenkwinkels.

21. Vorrichtung nach Anspruch 20, wobei der maximale Schwenkwinkel zwischen 10° und 30°, insbesondere zwischen im wesentlichen 12° und 20° liegt.

22. Vorrichtung nach Anspruch 15 oder Anspruch 17, wobei das Führungsglied (60) eine bogenförmig gewölbte Kante (63) als Auslenkabschnitt aufweist, die von dem Nasenabschnitt ausgehend seitlich nach außen gerichtet ist, zur Auslenkung von Verschlußdeckeln weg vom Einlauftrichter.

23. Vorrichtung nach Anspruch 1, wobei das Ende des Steges (15) im Bereich der Sensor- und Austragseinrichtung liegt, insbesondere nach der Austragseinrichtung (16,18) der Sensor- und Austragseinrichtung.

24. Vorrichtung nach Anspruch 1, wobei nach der Sensor- und Austragseinrichtung (3) eine gegenüber einer Mittelebene (100) des Förderbandes (10) geneigte und langgestreckte magnetische Vorrichtung (51,55,56,57) angeordnet ist, zum Zusammenführen der mehr als einen Reihe von Verschlüssen nach dem Austragen der lagefalschen Verschlüsse.

25. Vorrichtung nach Anspruch 24, wobei die zweite langgestreckte Magnetvorrichtung (51) in ihrer Lage gegenüber der Mittelebene des Bandes veränderbar ist und/oder eine Breite aufweist, die geringer ist, als die Breite der ersten Magnetvorrichtung (50), welche vor der Sensor- und Austragseinrichtung unterhalb des Förderbandes (10) angeordnet ist.

26. Vorrichtung nach Anspruch 6, wobei zumindest zwei Sensoren (17,19) der Sensor- und Austragseinrichtung (17, 16,19,18;3) am Steg (15) höhenverstellbar angeordnet sind und der Steg gegenüber einer Oberfläche des Förderbandes (10) in seiner Lage fest angeordnet ist.

27. Vorrichtung nach Anspruch 24 oder Anspruch 7, wobei zumindest eine langgestreckte Magnetvorrichtung (50,51) unter der Oberfläche des Förderbands (10) aus mit jeweiligem Abstand aneinandergereihten Einzelmagneten besteht (55a,55b; 56a,56b; 57a,57b;58a,58b;59a,59b), welche in einem langgestreckten Träger (54,53) angeordnet sind.

28. Vorrichtung nach Anspruch 27, wobei die langgestreckte Magnetvorrichtung (51) in einem Zusammenführungsbereich (4) angeordnet ist und die "geneigte langgestreckte magnetische Vorrichtung" aus der Mehrzahl von beabstandet aneinander gereihten, geneigt zur Mittelebene des Förderbandes angeordneten Einzelmagneten besteht.

29. Vorrichtung nach Anspruch 27, wobei mehrere Abschnitte der Einzelmagnetreihe mehrere unterschiedliche Neigungen besitzen, um eine Zusammenführung von benachbarten Reihen auf eine Reihe an der Abgabestelle (6) zu erreichen.

30. Vorrichtung nach Anspruch 27, wobei zwei nebeneinander liegende Reihen (58,59) von Einzelmagneten vor einem Zusammenführungsbereich (4) unter dem Förderband (10) so angeordnet sind, daß sie beidseits des Steges (15) gelegen sind.

31. Vorrichtung nach Anspruch 27 oder 28, wobei die langgestreckte Magnetvorrichtung in einem Abstand (e) von dem Förderband angeordnet ist und dieser Abstand einstellbar ist (40), um eine Veränderung der magnetischen Anziehungskraft auf die Verschlußdeckel zu erhalten.

32. Vorrichtung nach Anspruch 7, wobei die langgestreckte Magnetvorrichtung (50) gefolgt ist von einer Anschluß-Magnetvorrichtung (51), um eine kontinuierliche Förderung der Verschlussdeckel zu erreichen.

33. Vorrichtung nach Anspruch 7, wobei die langgestreckte Magnetvorrichtung (50) keinen zu großen Spalt zu einer Anschluß-Magnetvorrichtung (51) belässt, um eine kontinuierliche Förderung der Verschlussdeckel zu erreichen.

34. Vorrichtung nach Anspruch 32, wobei die Anschluß-Magnetvorrichtung (51) deutlich schmäler ist, bevorzugt im wesentlichen halb so breit, als die vorhergehende Magnetvorrichtung (50).

35. Verfahren nach Anspruch 10, wobei eine Druckkraft auf das - insbesondere an einem von der Sensor- und Austragseinrichtung (3) abgewandten Lager (60a) schwenkbare - Führungsglied (60) ausgeübt wird, um über eine Federeinrichtung (66) eine Reaktionskraft zu ermöglichen.

36. Verfahren nach Anspruch 35, wobei bei einem Steigen der Druckkraft entweder auf einen Nasenabschnitt (61) oder eine innere Führungskante (62) des elastisch nachgiebigen Führungsglied (60,66) das Führungsglied ausgelenkt wird, um einen Einlauftrichter in seiner Mündungsweite zu verändern und eventuell blockierende Verschlüsse am Einlauf zu lockern.

37. Verfahren nach Anspruch 10, wobei
(c) nach der Sensor- und Austragseinrichtung (17,16, 19,18;3) die mehreren getrennten Reihen (R1,R2) in einem Zusammenführungsabschnitt (4,5) mit einem elastisch nachgiebigen Führungsglied (60,66) in die Reihe aus dicht aufeinander folgenden Verschlüssen zusammengeführt werden.

## Claims

1. Device for conveying closures (D) made from metallic sheet in an essentially vertical direction from a collecting point (1) to a delivery point (6), wherein the closures are selected to be in the correct position during conveying in order to deliver at the delivery point (6) only closures lying in the same position in a row of compactly arranged closures; having a conveyer belt (10) for transport (v1, v2) of the closures and having a sensor and discharge device (17, 16, 19, 18; 3) for registering wrongly positioned closures and for lateral discharge (q1, q2) of individual wrongly positioned closures; **characterised in that** in the path of the conveyer belt (10) before the sensor and discharge device (17, 16, 19, 18; 3), a bar (15) is arranged above the conveyer belt, which terminates after the sensor and discharge device (17, 16, 19, 18; 3) in order to
- separately supply to the sensor and discharge device (17, 16, 19, 18; 3) more than one row (R1, R2) of closures next to one another;
- to discharge wrongly positioned closures from several rows (R₁, R₂) at the sensor and discharge device (17, 16, 19, 18; 3);
- to bring together the several rows (R1, R2) in the row of compactly arranged closures in the path of the conveyer belt (10) after the sensor and discharge device (17, 16, 19, 18; 3).

2. Device according to claim 1, wherein the conveyer belt (10) is a rotating continuous conveyer belt.

3. Device according to claim 1, wherein the bar is arranged above a surface of the conveyer belt which is suitable for the transport of closures, in particular at a fixed height with respect to the surface of the conveyer belt.

4. Device according to claim 1, wherein the discharge device of the sensor and discharge device (3) has at least two discharge heads (16, 18), which are aligned in oppositely pointing directions, for the discharge of wrongly positioned closures at both sides of the conveyer belt (10).

5. Device according to claim 1 or 4, wherein the sensor device and the discharge device (3) are arranged (a) spaced apart in the longitudinal direction of the conveyer belt.

6. Device according to claim 1, wherein the sensors of the sensor and discharge device (17, 16, 19, 18; 3) are height-adjustable with respect to the bar (15) or with respect to the conveyer belt (10).

7. Device according to claim 1, wherein below the conveyer belt or below the one strand of the conveyer belt (10) is arranged an elongated magnet device (50; 58, 59), which extends as far as the sensor and discharge device (17, 16, 19, 18; 3) and terminates in the region thereof, and has a width which, relative to the conveyer belt, is designed so that it extends on this side and on the other side of the bar (15).

8. Device according to claim 7 or 1, wherein the bar (15) is designed as a central bar, so that a belt section of the conveyer belt of essentially the same width remains on this side and on the other side, in particular on the left and on the right of the bar.

9. Device according to claim 1, wherein a bringing-together region (4, 5) is then provided on the sensor and discharge device (17, 16, 19, 18; 3) for bringing together the several rows (R1, R2) of closures and for forming the row of compactly arranged closures.

10. Process for conveying closures made from metal sheet (D) in an essentially vertical direction from a collecting point (1) to a delivery point (6), wherein the closures are selected to be in the correct position during conveying by a sensor and discharge device (17, 16, 19, 18; 3) in order to deliver at the delivery point (6) closures lying in the same position in a row of compactly arranged closures, **characterised in that**
(a) more than one row (R1, R2) of closures next to one another are supplied to the sensor and discharge device (17, 16, 19, 18; 3) on the same conveyer belt (10);
(b) at the sensor and discharge device (17, 16, 19, 18; 3), wrongly positioned closures are discharged on both sides.

11. Process according to claim 10, wherein the closures are conveyed to the sensor and discharge device (3) on separate tracks but on the same conveyer belt (10), but track separation is removed after this device.

12. Process according to claim 10, wherein a magnet device (51; 55, 56, 57) running at an angle with respect to a central plane (100) of the conveyer belt (10) is arranged between sensor and discharge device and the delivery point (6), and the correctly positioned rows of closure lids are brought together (55, 56) on the same conveyer belt (10).

13. Process according to claim 12, wherein the magnet device for adjusting to various lid sizes is set at its inclined angle or at its inclination with respect to the central plane.

14. Process according to claim 10, wherein two rows of closures are conveyed on one conveyer belt (10) to the sensor and discharge device (3), but separated by a bar (15) of limited length.

15. Device according to claim 1, wherein at a distance from the sensor and discharge device (3), a guide member (60) is arranged to be pivotable and has a nose section (61) which points in the direction of the sensor and discharge device.

16. Device according to claim 15, wherein the guide member has an essentially triangular, elongated shape and the pivoting bearing or an axis of the bearing is arranged at an acute angle of the guide member, opposite the nose section and close to the outlet (6).

17. Device according to claim 15 or 16, wherein the guide member has a guide side edge (62), which starts from the nose section and is inclined with respect to a longitudinal plane of the conveyer belt (10), for the definition of an inlet funnel for the closures between the guide side edge and a guide strip (70, 71) at the edge of the conveyer belt (10).

18. Device according to claim 17, wherein the guide strip (70, 71) can be adjusted for adaptation of a width of the inlet funnel to different diameters of closure lids.

19. Device according to claim 15, wherein the guide member (60) is supported (66) to be resiliently flexible and the supporting force increases when the guide member is deflected away from a central plane of the belt.

20. Device according to claim 15, wherein the guide member (60) has for its pivoting movement two limiting stops (65, 64a, 64b) for fixing a maximum pivoting angle.

21. Device according to claim 20, wherein the maximum pivoting angle lies between 10° and 30°, in particular between essentially 12° and 20°.

22. Device according to claim 15 or claim 17, wherein the guide member (60) has an edge (63) arched like a bow as the deflecting section, which is directed laterally outwards starting from the nose section for deflecting closure lids away from the inlet funnel.

23. Device according to claim 1, wherein the end of the bar (15) lies in the region of the sensor and discharge device, in particular after the discharge device (16, 18) of the sensor and discharge device.

24. Device according to claim 1, wherein an elongated magnetic device (51, 55, 56, 57) which is inclined with respect to a central plane (100) of the conveyer belt (10) is arranged after the sensor and discharge device (3), for bringing together the more than one row of closures after discharging the wrongly positioned closures.

25. Device according to claim 24, wherein the position of the second elongated magnet device (51) can be changed with respect to the central plane of the belt and/or has a width which is less than the width of the first magnet device (50), which is arranged below the conveyer belt (10) before the sensor and discharge device.

26. Device according to claim 6, wherein at least two sensors (17, 19) of the sensor and discharge device (17, 16, 19, 18; 3) are arranged on the bar (15) to be height-adjustable and the bar is arranged firmly in its position with respect to a surface of the conveyer belt (10).

27. Device according to claim 24 or claim 7, wherein at least one elongated magnet device (50, 51) below the surface of the conveyer belt (10) consists (55a, 55b; 56a, 56b; 57a, 57b; 58a, 58b; 59a, 59b) of individual magnets strung together at a particular distance, and which are arranged in an elongated support (54, 53).

28. Device according to claim 27, wherein the elongated magnet device (51) is arranged in a bringing-together region (4) and the "inclined elongated magnetic device" consists of the plurality of individual magnets strung together at a distance and arranged inclined to the central plane of the conveyer belt.

29. Device according to claim 27, wherein several sections of the individual magnet row have several different inclinations in order to achieve bringing together of adjacent rows to a row at the delivery point (6).

30. Device according to claim 27, wherein two rows (58, 59) of individual magnets lying next to one another are arranged below the conveyer belt (10) before a bringing-together region (4), so that they are placed on both sides of the bar (15).

31. Device according to claim 27 or 28, wherein the elongated magnet device is arranged at a distance (e) from the conveyer belt and this distance can be adjusted (40) in order to make a change in the magnetic force of attraction on the closure lids.

32. Device according to claim 7, wherein the elongated magnet device (50) is followed by a connection magnet device (51) in order to achieve continuous conveying of the closure lids.

33. Device according to claim 7, wherein the elongated magnet device (50) does not leave too large a gap from a connection magnet device (51) in order to achieve continuous conveying of the closure lids.

34. Device according to claim 32, wherein the connection magnet device (51) is significantly narrower, preferably essentially half as wide as the preceding magnet device (50).

35. Process according to claim 10, wherein a compressive force is exerted on the guide member (60) - which can be pivoted on a bearing (60a) facing away from the sensor and discharge device (3) - in order to facilitate a force of reaction via a spring device (66).

36. Process according to claim 35, wherein the guide member is deflected when the compressive force is increased either on a nose section (61) or an inner guide edge (62) of the resiliently flexible guide member (60, 66) in order to change the mouth width of an inlet funnel and to loosen closures which are possibly blocking the inlet.

37. Process according to claim 10, wherein
(c) after the sensor and discharge device (17, 16, 19, 18; 3), the several separate rows (R1, R2) are brought together into the row of compactly arranged closures in a bringing-together section (4, 5) with a resiliently flexible guide member (60, 66).

## Revendications

1. Système de transport de couvercles (D) en tôle métallique dans une direction sensiblement verticale d'un emplacement de collecte (1) vers un emplacement de livraison (6),
les couvercles étant sélectionnés en bonne position pendant le transport afin de ne délivrer à l'emplacement de livraison (6) que des couvercles situés dans la même position dans une rangée de couvercles se succédant étroitement,
comportant une bande transporteuse (10) pour le transport (v1, v2) des couvercles, et un dispositif de détection et d'évacuation (17, 16, 19, 18 ; 3) pour la détection de couvercles mal positionnés et l'évacuation latérale (q1, q2) de couvercles individuels mal positionnés,
**caractérisé en ce que**
une traverse (15) est agencée au-dessus de la bande transporteuse dans la voie de la bande transporteuse (10) en amont du dispositif de détection et d'évacuation (17, 16, 19, 18 ; 3), qui se termine en aval du dispositif de détection et d'évacuation (17, 16, 19, 18 ; 3)\, afin
- d'amener séparément plus d'une rangée (R1, R2) de couvercles côte à côte au dispositif de détection et d'évacuation (17, 16, 19, 18 ; 3) ;
- d'évacuer au niveau du dispositif de détection et d'évacuation (17, 16, 19, 18 ; 3) des couvercles mal positionnés de plusieurs rangées (R1, R2) ;
- de réintégrer en aval du dispositif de détection et d'évacuation (17, 16, 19, 18 ; 3) les plusieurs rangées (R1, R2) dans la rangée des couvercles se succédant étroitement dans la voie de la bande transporteuse (10).

2. Système selon la revendication 1, dans lequel la bande transporteuse (10) est une bande transporteuse circulant sans fin.

3. Système selon la revendication 1, dans lequel la traverse est agencée au-dessus d'une surface de la bande transporteuse appropriée pour le transport des couvercles, notamment à une hauteur fixe par rapport à la surface de la bande transporteuse.

4. Système selon la revendication 1, dans lequel le dispositif d'évacuation du dispositif de détection et d'évacuation (3) comporte au moins deux têtes d'évacuation (16, 18), qui sont orientées dans des sens opposés pour l'évacuation des deux côtés de la bande transporteuse (10) de couvercles mal positionnés.

5. Système selon la revendication 1 ou 4, dans lequel le dispositif de détection et le dispositif d'évacuation (3) sont agencés (a) en étant espacés de la bande transporteuse dans la direction longitudinale.

6. Système selon la revendication 1, dans lequel les détecteurs du dispositif de détection et d'évacuation (17, 16, 19, 18 ; 3) sont réglables en hauteur par rapport à la traverse (15) ou par rapport à la bande transporteuse (10).

7. Système selon la revendication 1, dans lequel un dispositif magnétique allongé (50 ; 58, 59) est agencé sous la bande transporteuse ou sous l'un des brins de la bande transporteuse (10), lequel s'étend jusqu'au dispositif de détection et d'évacuation (17, 16, 19, 18 ; 3) et se termine dans sa zone, et dont la largeur par rapport à la bande transporteuse est telle qu'il s'étende de part et d'autre de la traverse (15).

8. Système selon la revendication 7 ou 1, dans lequel la traverse (15) est réalisée sous la forme d'une traverse médiane, de sorte qu'un tronçon de bande de largeur sensiblement identique subsiste de part et d'autre de la bande transporteuse (10), notamment à gauche et à droite de la traverse.

9. Système selon la revendication 1, dans lequel une zone de regroupement (4, 5) est prévue en aval du dispositif de détection et d'évacuation (17, 16, 19, 18 ; 3) pour regrouper les plusieurs rangées (R1, R2) de couvercles, et pour former la rangée de couvercles se succédant étroitement.

10. Procédé de transport de couvercles (D) en tôle métallique dans une direction sensiblement verticale d'un emplacement de collecte (1) vers un emplacement de livraison (6), les couvercles étant sélectionnés en bonne position pendant le transport par un dispositif de détection et d'évacuation (17, 16, 19, 18 ; 3), afin de délivrer à l'emplacement de livraison (6) des couvercles situés dans la même position dans une rangée de couvercles se succédant étroitement,
**caractérisé en ce que**
(a) plus d'une rangée (R1, R2) de couvercles situés les uns à coté des autres est amenée au dispositif de détection et d'évacuation (17, 16, 19, 18 ; 3) sur la même bande transporteuse (10) ;
(b) des couvercles mal positionnés sont évacués des deux côtés au niveau du dispositif de détection et d'évacuation (17, 16, 19, 18 ; 3).

11. Procédé selon la revendication 10, d'après lequel les couvercles sont amenés au dispositif de détection et d'évacuation (3) sur des voies séparées, mais avec la même bande transporteuse (10), la séparation de voies étant cependant supprimée après ce dispositif.

12. Procédé selon la revendication 10, d'après lequel un dispositif magnétique (51; 55, 56, 57) incliné par rapport à un plan médian (100) de la bande transporteuse (10) est agencé entre le dispositif de détection et d'évacuation et l'emplacement de livraison (6), et les rangées de couvercles de fermeture correctement positionnés sont regroupées (55, 56) sur la même bande transporteuse (10).

13. Procédé selon la revendication 12, d'après lequel le dispositif magnétique est réglé dans son angle d'inclinaison ou dans son inclinaison par rapport au plan médian pour le réglage de différentes tailles de couvercles.

14. Procédé selon la revendication 10, d'après lequel deux rangées de couvercles sont amenées séparément au dispositif de détection et d'évacuation (3) sur une bande transporteuse (10), mais limitée dans sa longueur par une traverse (15).

15. Système selon la revendication 1, dans lequel un organe de guidage (60) pivotant est agencé à un certain écartement du dispositif de détection et d'évacuation (3), lequel organe comporte un tronçon de taquet (61) qui est orienté en direction du dispositif de détection et d'évacuation.

16. Système selon la revendication 15, dans lequel l'organe de guidage possède une forme allongée sensiblement triangulaire, et le palier de pivotement ou un axe du palier est disposé suivant un angle aigu de l'organe de guidage par rapport au tronçon de taquet, et à proximité de la sortie (6).

17. Système selon la revendication 15 ou 16, dans lequel l'organe de guidage comporte un bord latéral de guidage (62), qui part du tronçon de taquet et est incliné par rapport à un plan longitudinal de la bande transporteuse (10), afin de définir une trémie d'entrée pour les couvercles entre le bord latéral de guidage et une barre de guidage (70, 71) du bord de la bande transporteuse (10).

18. Système selon la revendication 17, dans lequel la barre de guidage (70, 71) est réglable pour l'adaptation d'une largeur de la trémie d'entrée à différents diamètres de couvercles de fermeture.

19. Système selon la revendication 15, dans lequel l'organe de guidage (60) est soutenu (66) en cédant de façon élastique, et la force de soutien augmente lorsque l'organe de guidage est dévié d'un plan médian de la bande.

20. Système selon la revendication 15, dans lequel l'organe de guidage (60) comporte deux butées de limitation (65, 64a, 64b) pour son mouvement de pivotement, afin de définir un angle de pivotement maximal.

21. Système selon la revendication 20, dans lequel l'angle de pivotement maximal se situe entre 10° et 30°, notamment entre sensiblement 12° et 20°.

22. Système selon la revendication 15 ou la revendication 17, dans lequel l'organe de guidage (60) comporte en tant que tronçon de déviation un bord (63) cintré en forme d'arc, qui part du tronçon de taquet et est orienté latéralement vers l'extérieur pour dévier des couvercles de fermeture de la trémie d'entrée.

23. Système selon la revendication 1, dans lequel l'extrémité de la traverse (15) est située dans la zone du dispositif de détection et d'évacuation, notamment en aval du dispositif d'évacuation (16, 18) du dispositif de détection et d'évacuation.

24. Système selon la revendication 1, dans lequel un dispositif magnétique (51, 55, 56, 57) incliné par rapport à un plan médian (100) de la bande transporteuse (10), et allongé, est agencé en aval du dispositif de détection et d'évacuation (3) pour regrouper la plus d'une rangée de couvercles après l'évacuation des couvercles mal positionnés.

25. Système selon la revendication 24, dans lequel le deuxième dispositif magnétique allongé (51) peut être modifié dans sa position par rapport au plan médian de la bande, et/ou comporte une largeur qui est inférieure à la largeur du premier dispositif magnétique (50) qui est agencé sous la bande transporteuse (10) en amont du dispositif de détection et d'évacuation.

26. Système selon la revendication 6, dans lequel au moins deux détecteurs (17, 19) du dispositif de détection et d'évacuation (17, 16, 19, 18 ; 3) sont agencés de façon réglable en hauteur sur la traverse (15), et la traverse est disposée en étant fixe dans sa position par rapport à une surface de la bande transporteuse (10).

27. Système selon la revendication 24 ou la revendication 7, dans lequel au moins un dispositif magnétique allongé (50, 51), constitué d'aimants individuels (55a, 55b ; 56a, 56b ; 57a, 57b ; 58a, 58b ; 59a, 59b) adjacents les uns aux autres à un écartement respectif, qui sont disposés dans un support allongé (54, 53), est agencé sous la surface de la bande transporteuse (10).

28. Système selon la revendication 27, dans lequel le dispositif magnétique allongé (51) est agencé dans une zone de regroupement (4), et le "dispositif magnétique allongé incliné" est constitué de la pluralité d'aimants individuels adjacents les uns aux autres à un écartement respectif, disposés de façon inclinée par rapport au plan médian de la bande transporteuse.

29. Système selon la revendication 27, dans lequel plusieurs tronçons de la série d'aimants individuels possèdent plusieurs inclinaisons différentes, afin d'obtenir sur l'emplacement de livraison (6) un regroupement de rangées adjacentes en une rangée.

30. Système selon la revendication 27, dans lequel deux rangées adjacentes (58, 59) d'aimants individuels sont agencées en amont d'une zone de regroupement (4) sous la bande transporteuse (10) de telle sorte qu'elles soient situées de part et d'autre de la traverse (15).

31. Système selon la revendication 27 ou 28, dans lequel le dispositif magnétique allongé est agencé à un écartement (e) de la bande transporteuse, et cet écartement est réglable (40) afin d'obtenir une modification de la force d'attraction magnétique exercée sur les couvercles de fermeture.

32. Système selon la revendication 7, dans lequel le dispositif magnétique allongé (50) est suivi d'un dispositif magnétique de raccordement (51), afin d'assurer un transport continu des couvercles de fermeture.

33. Système selon la revendication 7, dans lequel le dispositif magnétique allongé (50) ne laisse pas d'interstice trop important par rapport à un dispositif magnétique de raccordement (51), afin d'assurer un transport continu des couvercles de fermeture.

34. Système selon la revendication 32, dans lequel le dispositif magnétique de raccordement (51) est nettement plus étroit, de préférence sensiblement moitié moins large, que le dispositif magnétique (50) situé en amont.

35. Procédé selon la revendication 10, d'après lequel une force de pression est exercée sur l'organe de guidage (60) - pouvant notamment pivoter sur un palier (60a) opposé au dispositif de détection et d'évacuation (3) - afin de permettre une force de réaction par l'intermédiaire d'un dispositif à ressort (66).

36. Procédé selon la revendication 35, d'après lequel l'organe de guidage est dévié lors d'une augmentation de la force de pression exercée, soit sur un tronçon de taquet (61), soit sur un bord de guidage intérieur (62) de l'organe de guidage (60, 66) cédant de façon élastique, afin de modifier la largeur d'ouverture d'une trémie d'entrée, et de dégager des couvercles éventuellement bloqués au niveau de l'entrée.

37. Procédé selon la revendication 10, d'après lequel
(c) en aval du dispositif de détection et d'évacuation (17, 16, 19, 18 ; 3), les plusieurs rangées séparées (R1, R2) sont réintégrées dans la rangée de couvercles se succédant étroitement, dans un tronçon de regroupement (4, 5) avec un organe de guidage (60, 66) cédant de façon élastique.
